# EUROPEAN PATENT SPECIFICATION

(11) **EP 4 113 661 B1**
(45) Date of publication and mention of the grant of the patent: **13.11.2024**
(21) Application number: 21759580.0
(22) Date of filing: 25.02.2021
(51) Int. Cl.: H01M 4/505, H01M 4/525, C01G 53/00

(54) **POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**
POSITIVELEKTRODENAKTIVMATERIAL FÜR SEKUNDÄRBATTERIEN MIT WASSERFREIEM ELEKTROLYT UND SEKUNDÄRBATTERIE MIT WASSERFREIEM ELEKTROLYT
MATÉRIAU ACTIF D'ÉLECTRODE POSITIVE POUR BATTERIES SECONDAIRES À ÉLECTROLYTE NON AQUEUX, ET BATTERIE SECONDAIRE À ÉLECTROLYTE NON AQUEUX

(30) Priority: 27.02.2020 JP 2020031189
(43) Date of publication of application: 04.01.2023
(73) Proprietor: Panasonic Intellectual Property Management Co., Ltd., Osaka-shi, Osaka 540-6207 (JP)
(72) Inventor: OMAE, Takanori, Osaka-shi, Osaka 540-6207 (JP); NATSUI, Ryuichi, Osaka-shi, Osaka 540-6207 (JP); HIBINO, Mitsuhiro, Osaka-shi, Osaka 540-6207 (JP); NAKURA, Kensuke, Osaka-shi, Osaka 540-6207 (JP)
(74) Representative: Novagraaf International SA
(86) International application number: PCT/JP2021/007140
(87) International publication number: WO 2021/172442

(56) References cited:
- EP-A1- 3 272 710
- WO-A1-2018/221346
- JP-A- 2014 029 829
- JP-A- 2017 084 521
- JP-A- 2018 166 123
- US-A1- 2006 134 521
- US-A1- 2019 355 981

## Description

### TECHNICAL FIELD

The present disclosure relates to a positive electrode active material for a non-aqueous electrolyte secondary battery, and a non-aqueous electrolyte secondary battery using the positive electrode active material for a non-aqueous electrolyte secondary battery.

### BACKGROUND ART

A lithium-transition metal composite oxide has been conventionally used widely as a positive electrode active material for a secondary battery such as a lithium ion battery, and a Li-excess positive electrode active material containing a large amount of Li has received attention as a material for high-output secondary batteries. Characteristics required for a secondary battery are varied depending on applications, and Patent Literature 1 discloses a technique for controlling a particle aggregation state of a positive electrode active material and thus improving the output at a low temperature US 2006/134521discloses a lithium composite oxide particle for use as a positive electrode material, which is characterised by the observed properties measured by mercury intrusion porosimetry

### CITATION LIST

### PATENT LITERATURE

PATENT LITERATURE 1: Japanese Unexamined Patent Application Publication No. 2015-18678

### SUMMARY

In recent years, a secondary battery has been increasingly required to have increased capacity and output, and a further increase in density of the battery has been studied. However, a positive electrode including the positive electrode active material disclosed in Patent Literature 1 has room for improvement in terms of an enhancement in energy density.

A positive electrode active material for a non-aqueous electrolyte secondary battery of one aspect of the present disclosure includes a lithium-transition metal composite oxide. The lithium-transition metal composite oxide is represented by general formula LiₓMn_{y}Ni_{z}Me_{2-x-y-z}OₐF_{b} (wherein 1 ≤ x ≤ 1.2, 0.4 ≤ y ≤ 0.7, 0.1 ≤ z ≤ 0.4, 0 < b ≤ 0.2, 1.9 ≤ a + b ≤ 2.1, and Me is at least one element selected from Co, Al, Ti, Ge, Nb, Sr, Mg, Si, P, and Sb), and has a BET specific surface area of 1 m²/g or more and 4 m²/g or less and an average pore size of 100 nm or less.

A secondary battery of one aspect of the present disclosure comprises a positive electrode including the above positive electrode active material for a non-aqueous electrolyte secondary battery, a negative electrode, and a non-aqueous electrolyte.

According to a positive electrode active material for a non-aqueous electrolyte secondary battery of one aspect of the present disclosure, the energy density of a positive electrode can be enhanced.

### BRIEF DESCRIPTION OF DRAWING

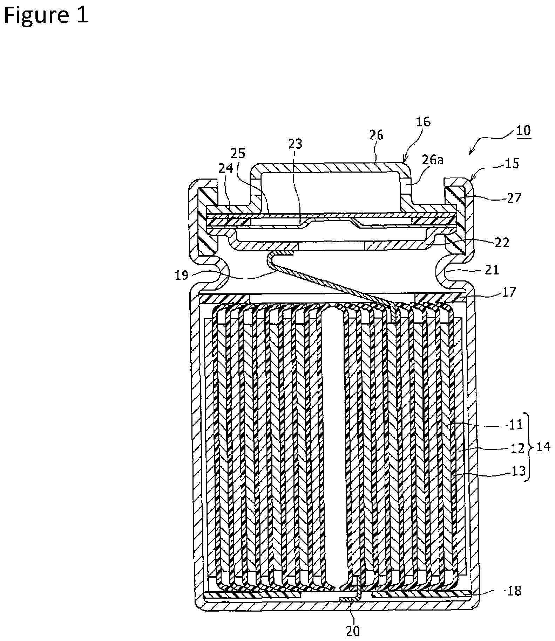

FIG. 1 is a longitudinal sectional view of a cylindrical non-aqueous electrolyte secondary battery of an exemplary embodiment.

### DESCRIPTION OF EMBODIMENTS

A Li-excess positive electrode active material in which a transition metal layer of a lithium-transition metal composite oxide having a layered rock-salt structure is partially replaced with Li receives attention as a material for a high-output secondary battery. While the energy density [Wh/L] is calculated from (capacity [Ah/g]) × (voltage [V]) × (active material density [g/L]), the capacity and the active material density are generally in a mutual trade-off relation and thus a positive electrode high in energy density cannot be obtained by only a simple increase in active material density. The present inventors have made intensive studies about such problems, and as a result, has found that the energy density of a positive electrode is enhanced by a composition of a lithium-transition metal composite oxide included as a positive electrode active material being Li-excess containing Mn in a large amount, and also by a BET specific surface area and an average pore size of particles in predetermined ranges. Thus, the inventors have conceived a positive electrode active material for a non-aqueous electrolyte secondary battery of the following aspect, which can allow for an enhancement in energy density of a positive electrode.

A positive electrode active material for a non-aqueous electrolyte secondary battery of one aspect of the present disclosure includes a lithium-transition metal composite oxide. The lithium-transition metal composite oxide is represented by general formula LiₓMn_{y}Ni_{z}Me_{2-x-y-z}OₐF_{b} (wherein 1 ≤ x ≤ 1.2, 0.4 ≤ y ≤ 0.7, 0.1 ≤ z ≤ 0.4, 0 < b ≤ 0.2, 1.9 ≤ a + b ≤ 2.1, and Me is at least one element selected from Co, Al, Ti, Ge, Nb, Sr, Mg, Si, P, and Sb), and has a BET specific surface area of 1 m²/g or more and 4 m²/g or less and an average pore size of 100 nm or less.

Hereinafter, an exemplary embodiment of a cylindrical secondary battery of the present disclosure will be described in detail with reference to drawings. In the following description, specific shapes, materials, numerical values, directions, and the like are illustrative for facilitating understanding of the present disclosure, and can be appropriately modified depending on the specification of the cylindrical secondary battery. An exterior body is not limited to a cylindrical body, and may be, for example, rectangular. When a plurality of embodiments and variants are included in the following description, it has been expected from the beginning that configurations thereof are appropriately combined and used.

FIG. 1 is an axial sectional view of a cylindrical secondary battery 10 of an exemplary embodiment. In the secondary battery 10 shown in FIG. 1, an electrode assembly 14 and a non-aqueous electrolyte are housed in an exterior body 15. The electrode assembly 14 has a wound-type structure formed by winding a positive electrode 11 and a negative electrode 12 with a separator 13 being interposed therebetween. Hereinafter, there will be described under the assumption that a sealing assembly 16 side is "upper" and a bottom side of the exterior body 15 is "lower", for the purpose of illustration.

An opening end of the exterior body 15 is blocked by a sealing assembly 16, and thus the interior of the secondary battery 10 is tightly sealed. Respective insulating plates 17 and 18 are disposed on and under the electrode assembly 14. A positive electrode lead 19 passes through a though-hole in the insulating plate 17 and extends upward, and is welded to the lower surface of a filter 22, which is the bottom board of the sealing assembly 16. In the secondary battery 10, a cap 26, which is the top board of the sealing assembly 16 and electrically connected to the filter 22, serves as a positive electrode terminal. On the other hand, a negative electrode lead 20 passes through a though-hole in the insulating plate 18 and extends toward the bottom of the exterior body 15, and is welded to the inner surface of the bottom of the exterior body 15. In the secondary battery 10, the exterior body 15 serves as a negative electrode terminal. When the negative electrode lead 20 is placed on a terminal portion, the negative electrode lead 20 passes on the outside of the insulating plate 18 and extends toward the bottom of the exterior body 15, and is welded to the inner surface of the bottom of the exterior body 15.

The exterior body 15 is, for example, a cylindrical metal container having a closed-end. A gasket 27 is disposed between the exterior body 15 and the sealing assembly 16 to ensure that the interior of the secondary battery 10 is tightly sealed. The exterior body 15 has, for example, a grooved portion 21 which is formed by pressing a lateral surface from outside and which supports the sealing assembly 16. The grooved portion 21 is preferably formed annularly along the circumferential direction of the exterior body 15, and the upper surface thereof supports the sealing assembly 16 via the gasket 27.

The sealing assembly 16 has the filter 22, a lower vent member 23, an insulating member 24, an upper vent member 25, and the cap 26 which are stacked in the listed order from the electrode assembly 14 side. Each of the members constituting the sealing assembly 16 has, for example, a disk or ring shape, and the members other than the insulating member 24 are electrically connected to each other. The lower vent member 23 and the upper vent member 25 are connected to each other at respective middle portions and the insulating member 24 is interposed between respective circumferences. If the inner pressure of the battery increases by abnormal heat generation, for example, the lower vent member 23 ruptures to thereby cause the upper vent member 25 to swell toward the cap 26 and separate from the lower vent member 23, thereby breaking the electrical connection between the members. If the inner pressure further increases, the upper vent member 25 ruptures to discharge gas through an opening 26a of the cap 26.

Hereinafter, the positive electrode 11, the negative electrode 12, the separator 13 and the non-aqueous electrolyte constituting the secondary battery 10, in particular, a positive electrode active material included in a positive electrode mixture layer constituting the positive electrode 11 will be described in detail.

### [Positive Electrode]

The positive electrode 11 has a positive electrode core, and a positive electrode mixture layer disposed on a surface of the positive electrode core. The positive electrode core here used can be, for example, foil of a metal, such as aluminum, which is stable in the electric potential range of the positive electrode 11, or a film in which such a metal is disposed on an outer layer. The positive electrode mixture layer includes a positive electrode active material, a binder, and a conductive agent, and is preferably disposed on both sides of the positive electrode core excluding a portion to which the positive electrode lead 19 is to be connected. The positive electrode 11 can be produced by, for example, coating a surface of the positive electrode core with a positive electrode mixture slurry including, for example, a positive electrode active material, a binder, and a conductive agent, and drying and then compressing the resultant coating to thereby form the positive electrode mixture layer on each of both sides of the positive electrode core.

Examples of the conductive agent included in the positive electrode mixture layer can include carbon materials such as carbon black, acetylene black, Ketjenblack, and graphite. Examples of the binder included in the positive electrode mixture layer can include fluoro resins such as polytetrafluoroethylene (PTFE) and poly(vinylidene fluoride) (PVdF), polyacrylonitrile (PAN), polyimide, acrylic resins, and polyolefin. Such a resin may be used in combination with, for example, a cellulose derivative such as carboxymethyl cellulose (CMC) or a salt thereof, or polyethylene oxide (PEO).

The positive electrode active material includes a lithium-transition metal composite oxide. The lithium-transition metal composite oxide preferably has a crystal structure of an O3 structure. The O3 structure preferably occupies 50 vol% or more, more preferably 90 vol% or more, further preferably 98 vol% or more, particularly preferably 100 vol% of the crystal structure of the lithium-transition metal composite oxide, in terms of, for example, stability of the crystal structure. The O3 structure is a layered crystal structure where lithium is present at the center of an oxygen octahedron and there are three types of overlapping between oxygen and a transition metal, per unit lattice, and belongs to the space group R-3m or C2/m.

The lithium-transition metal composite oxide is represented by general formula LiₓMn_{y}Ni_{z}Me_{2-x-y-z}OₐF_{b} (wherein 1 ≤ x ≤ 1.2, 0.4 ≤ y ≤ 0.7, 0.1 ≤ z ≤ 0.4, 0 < b ≤ 0.2, 1.9 ≤ a + b ≤ 2.1, and Me is at least one element selected from Co, Al, Ti, Ge, Nb, Sr, Mg, Si, P, and Sb). The molar fraction of each element constituting the lithium-transition metal composite oxide can be measured by, for example, inductively coupled plasma (ICP) emission spectrometric analysis and ion chromatography (IC) measurement. The positive electrode active material includes the lithium-transition metal composite oxide as a main component, and may be constituted from only the lithium-transition metal composite oxide. The positive electrode active material may include a composite compound other than the lithium-transition metal composite oxide as long as the effects of the present disclosure are not impaired.

x representing the proportion of Li in the lithium-transition metal composite oxide satisfies 0.9 ≤ x ≤ 1.2, preferably satisfies 0.95 ≤ x ≤ 1.05. When x is less than 0.9, battery capacity may be reduced as compared with a case where x satisfies the above range. When x is more than 1.2, charge-discharge cycle characteristics may deteriorate as compared with a case where x satisfies the above range.

y representing the proportion of Mn based on the total number of moles of metal elements except for Li in the lithium-transition metal composite oxide satisfies 0.4 ≤ y ≤ 0.7, preferably satisfies 0.5 ≤ y ≤ 0.7, more preferably satisfies 0.5 ≤ y ≤ 0.6.

z representing the proportion of Ni based on the total number of moles of metal elements except for Li in the lithium-transition metal composite oxide satisfies 0.1 ≤ z ≤ 0.4, preferably satisfies 0.2 ≤ z ≤ 0.4, more preferably satisfies 0.2 ≤ z ≤ 0.3.

Me (Me is at least one element selected from Co, Al, Ti, Ge, Nb, Sr, Mg, Si, P, and Sb) is an optional component, and 2-x-y-z representing the proportion thereof based on the total number of moles of metal elements except for Li in the lithium-transition metal composite oxide satisfies 2-x-y-z ≥ 0.

Me preferably contains no Co. In other words, the lithium-transition metal composite oxide preferably contains no Co. Co is expensive, and thus the content of Co is preferably kept low in view of production cost.

b representing the proportion ofF in the lithium-transition metal composite oxide satisfies 0 < b ≤ 0.2, preferably satisfies 0.02 ≤ b ≤ 0.1, more preferably satisfies 0.05 ≤ b ≤ 0.1. The lithium-transition metal composite oxide contains F, and thus the crystal structure of the lithium-transition metal composite oxide is enhanced in stability. In particular, a lithium-excess positive electrode active material including no Co may have a crystal structure lowered in stability, and thus the effect of enhancing stability by F is remarkably exerted. The crystal structure of the lithium-transition metal composite oxide is stabilized and thus, for example, a secondary battery is enhanced in durability and safety.

The lithium-transition metal composite oxide has a BET specific surface area of 1 m²/g or more and 4 m²/g or less, preferably 3 m²/g or more and 4 m²/g or less, and an average pore size of 100 nm or less, preferably 50 nm or less. The lithium-transition metal composite oxide, which has the composition of the general formula and furthermore has a BET specific surface area and an average pore size which are in such respective ranges, thus can allow for an enhancement in energy density of a positive electrode. The BET specific surface area can be measured with, for example, a commercially available measurement apparatus such as HM model-1201 of Macsorb. The average pore size can be measured with a mercury porosimeter (for example, AutoPore IV9510 model manufactured by Micromeritics Instrument Corporation).

Next, one example of the method for producing the lithium-transition metal composite oxide will be described.

First, while an aqueous solution in which metal salts such as a Mn compound and a Ni compound are dissolved is stirred, potassium hydrogen carbonate (KHCO₃) or the like is dropped thereto and thus the pH is adjusted to an alkaline value, to thereby precipitate (co-precipitate) and obtain a transition metal carbonate including Mn, Ni, and the like. A Me compound may be dissolved, together with the Mn compound and the Ni compound, in the aqueous solution, and then precipitated. The Mn compound is not particularly limited, and may be, for example, MnSO₄, Mn(NO₃)₂, or Mn(CH₃COO)₂. The Ni compound is not particularly limited, and may be, for example, NiSO₄, Ni(NO₃)₂, or Ni(CH₃COO)₂. The Me compound is not particularly limited, and may be, for example, sulfate, nitrate, or acetate of Me.

The transition metal carbonate and the Li compound are added and mixed at a predetermined molar ratio, and the resultant mixture is fired, to thereby produce the lithium-transition metal composite oxide. In firing conditions of the mixture, the temperature may be 700°C to 1000°C, the time may be 1 hour to 20 hours, and multistep firing for firing in a plurality of temperature regions may also be comprised. The firing atmosphere may be an oxygen atmosphere or may be in the air. The Li compound is not particularly limited, and may be, for example, LiF, Li₂CO₃, or LiOH. The BET specific surface area and the average pore size of the lithium-transition metal composite oxide can be changed by adjustment of the production method. For example, an increase in firing temperature may result in a decrease in BET specific surface area. A dispersant may be added to the aqueous solution in which the metal salts are dissolved, to thereby adjust the average pore size of the transition metal carbonate to be precipitated, and change the average pore size of the lithium-transition metal composite oxide. The lithium-transition metal composite oxide may be washed with water and dehydrated, and then subjected to a heat treatment for evaporation of any water content. The heat treatment conditions are not particularly limited, and the temperature may be 50°C to 200°C and the time may be 0.5 hours to 10 hours.

In another example of the method for producing the lithium-transition metal composite oxide, a Me compound may be added together during addition and mixing of a transition metal carbonate including Mn, Ni, and the like and including no Me, and a Li compound. In this case, the Me compound is not limited to a compound to be dissolved in the aqueous solution, and, for example, sulfate, nitrate, or acetate of Me, or also oxide, hydroxide, or fluoride thereof may be used.

### [Negative Electrode]

The negative electrode 12 has a negative electrode core, and a negative electrode mixture layer disposed on a surface of the negative electrode core. The negative electrode core here used can be, for example, foil of a metal, such as copper, which is stable in the electric potential range of the negative electrode, or a film in which such a metal is disposed on an outer layer. The negative electrode mixture layer includes a negative electrode active material and a binder, and is preferably disposed on both sides of the negative electrode core excluding a portion to which the negative electrode lead 20 is to be connected. The negative electrode 12 can be produced by, for example, coating a surface of the negative electrode core with a negative electrode mixture slurry including, for example, a negative electrode active material and a binder, and drying and then compressing the resultant coating to thereby form the negative electrode mixture layer on each of both sides of the negative electrode core.

The negative electrode mixture layer may include, for example, a carbonaceous active material that reversibly intercalates and deintercalates lithium ions, as the negative electrode active material. The carbonaceous active material is suitably graphite, for example, natural graphite such as flake-shaped graphite, massive graphite, or earthy graphite, or artificial graphite such as massive artificial graphite (MAG) or graphitized mesophase carbon microbeads (MCMB). A Si active material constituted from at least one of Si and a Si-containing compound may be used in the negative electrode active material, and the carbonaceous active material and the Si active material may be used in combination.

The binder included in the negative electrode mixture layer, here used, can be, for example, a fluoro resin, PAN, polyimide, an acrylic resin, or polyolefin, as in the case of the positive electrode, and is preferably styrene-butadiene rubber (SBR). The negative electrode mixture layer preferably further includes, for example, CMC or a salt thereof, polyacrylic acid (PAA) or a salt thereof, or poly(vinyl alcohol) (PVA). In particular, SBR, and CMC or a salt thereof, or PAA or a salt thereof are suitably used in combination.

### [Separator]

For example, an ion-permeable and insulating porous sheet is used as the separator 13. Specific examples of the porous sheet include a microporous thin film, woven fabric, and nonwoven fabric. Suitable examples of the material for the separator include olefin resins such as polyethylene and polypropylene, and cellulose. The separator 13 may be a laminate including a cellulose fiber layer and a layer of fibers of a thermoplastic resin such as an olefin resin. The separator may be a multi-layered separator including a polyethylene layer and a polypropylene layer, and a surface of the separator 13 to be used may be coated with a material such as an aramid resin or ceramic.

### [Non-Aqueous Electrolyte]

The non-aqueous electrolyte includes a non-aqueous solvent and an electrolyte salt dissolved in the non-aqueous solvent. The non-aqueous electrolyte is not limited to a liquid electrolyte (electrolyte solution), and may be a solid electrolyte using a gel polymer or the like. Examples of the non-aqueous solvent that can be used include esters, ethers, nitriles such as acetonitrile, amides such as dimethylformamide, and any mixed solvent of two or more thereof. The non-aqueous solvent may contain a halogen-substituted product formed by replacing at least a portion of hydrogen of any of the above solvents with a halogen atom such as fluorine.

Examples of the esters include cyclic carbonate esters such as ethylene carbonate (EC), propylene carbonate (PC), and butylene carbonate, chain carbonate esters such as dimethyl carbonate (DMC), ethyl methyl carbonate (EMC), diethyl carbonate (DEC), methyl propyl carbonate, ethyl propyl carbonate, and methyl isopropyl carbonate, cyclic carboxylate esters such as γ-butyrolactone and γ-valerolactone, and chain carboxylate esters such as methyl acetate, ethyl acetate, propyl acetate, methyl propionate (MP), ethyl propionate, and γ-butyrolactone.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers, and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, di phenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl.

Preferable examples of the halogen-substituted product for use include a fluorinated cyclic carbonate ester such as fluoroethylene carbonate (FEC), and a fluorinated chain carboxylate ester such as a fluorinated chain carbonate ester.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (where 1 < x < 6, and n is 1 or 2), LiB₁₀Cl₁₀, LiCl, LiBr, LiI, chloroborane lithium, lithium lower aliphatic carboxylate, borate salts such as Li₂B₄O₇ and Li(B(C₂O₄)F₂), and imide salts such as LiN(SO₂CF₃)₂ and LiN(CₗF₂ₗ₊₁SO₂)(CₘF₂ₘ₊₁SO₂) {where l and m are integers of 1 or more}. These lithium salts may be used singly or a plurality thereof may be mixed and used. Among these, LiPF₆ is preferably used in view of ionic conductivity, electrochemical stability, and other properties. The concentration of the lithium salt is preferably 0.8 to 1.8 mol per liter of the solvent.

### EXAMPLES

Hereinafter, the present disclosure will be further described with reference to Examples, but the present disclosure is not intended to be limited to such Examples.

### <Example 1>

### [Synthesis of Positive Electrode Active Material]

An aqueous solution in which MnSO₄ and NiSO₄ were dissolved at a molar ratio between Mn and Ni, of 0.667:0.333, was reacted with stirring for two and half hours, and KHCO₃ was dropped thereinto to adjust the pH to 7.5, to thereby precipitate (Mn_{0.667}Ni_{0.333})CO₃. Next, (Mn_{0.667}Ni_{0.333})CO₃, LiF, and Li₂CO₃ were mixed at a ratio of 0.833:0.05:0.5585, and the resultant mixture was fired in the air at 900°C for 10 hours, to thereby obtain a lithium-transition metal composite oxide. The composition of the lithium-transition metal composite oxide obtained was measured with an ICP emission spectrophotometer (trade name "iCAP6300" manufactured by Thermo Fisher Scientific, Inc.) and an ion chromatography (IC) apparatus, and as a result, the composition was as follows: Li_{1.167}(Mn_{0.667}Ni_{0.333})_{0.833}O_{1.95}F_{0.05}. The lithium-transition metal composite oxide had a BET specific surface area of 1.34 m²/g and an average pore size of 10.42 nm. The lithium-transition metal composite oxide was adopted as the positive electrode active material of Example 1.

### [Production of Positive Electrode]

The positive electrode active material, acetylene black, and poly(vinylidene fluoride) (PVdF) were mixed at a mass ratio of 100:2:2, and N-methyl-2-pyrrolidone (NMP) was used as a dispersion medium, to thereby prepare a positive electrode mixture slurry. Next, a surface of a positive electrode core made of aluminum foil was coated with the positive electrode mixture slurry, and the resultant coating was dried and compressed, and then cut to a predetermined electrode size, to thereby produce a positive electrode in which a positive electrode mixture layer was formed on the positive electrode core.

### [Preparation of Non-Aqueous Electrolyte]

A non-aqueous solvent was obtained by mixing fluoroethylene carbonate (FEC), ethylene carbonate (EC), and ethyl methyl carbonate (EMC) at a volume ratio of 1:1:6. LiPF₆ was dissolved at a concentration of 1.0 mol/L in the non-aqueous solvent, to thereby obtain a non-aqueous electrolyte.

### [Production of Test Cell]

Each lead wire was attached to the positive electrode and a counter electrode made of metallic Li, and the positive electrode and the counter electrode were oppositely placed with a separator made of polyolefin being interposed therebetween, to thereby produce an electrode assembly. The electrode assembly and the non-aqueous electrolyte were enclosed in an exterior body formed from an aluminum laminated film, to thereby produce a test cell.

### <Example 2>

A lithium-transition metal composite oxide was synthesized in the same manner as in Example 1 except that the reaction time of MnSO₄ and NiSO₄ with stirring was 8 hours. The lithium-transition metal composite oxide had a BET specific surface area of 1.48 m²/g and an average pore size of 23.21 nm. The lithium-transition metal composite oxide was adopted as the positive electrode active material of Example 2, to produce a test cell in the same manner as in Example 1.

### <Example 3>

A lithium-transition metal composite oxide was synthesized in the same manner as in Example 1 except that the reaction time of MnSO₄ and NiSO₄ with stirring was 5 hours and the firing temperature of the mixture of (Mn_{0.667}Ni_{0.333})CO₃, LiF and Li₂CO₃ was 800°C. The lithium-transition metal composite oxide had a BET specific surface area of 3.55 m²/g and an average pore size of 20.55 nm. The lithium-transition metal composite oxide was adopted as the positive electrode active material of Example 3, to produce a test cell in the same manner as in Example 1.

### <Example 4>

A lithium-transition metal composite oxide was synthesized in the same manner as in Example 1 except that the reaction time of MnSO₄ and NiSO₄ with stirring was 8 hours and the firing temperature of the mixture of (Mn_{0.667}Ni_{0.333})CO₃, LiF and Li₂CO₃ was 800°C. The lithium-transition metal composite oxide had a BET specific surface area of 3.56 m²/g and an average pore size of 6.73 nm. The lithium-transition metal composite oxide was adopted as the positive electrode active material of Example 4, to produce a test cell in the same manner as in Example 1.

### <Example 5>

A lithium-transition metal composite oxide was synthesized in the same manner as in Example 1 except that a dispersant was added to the aqueous solution in which MnSO₄ and NiSO₄ were dissolved and the firing temperature of the mixture of (Mn_{0.667}Ni_{0.333})CO₃, LiF and Li₂CO₃ was 800°C. The lithium-transition metal composite oxide had a BET specific surface area of 3.98 m²/g and an average pore size of 93.91 nm. The lithium-transition metal composite oxide was adopted as the positive electrode active material of Example 5, to produce a test cell in the same manner as in Example 1.

### <Comparative Example 1>

A lithium-transition metal composite oxide was synthesized in the same manner as in Example 1 except that the reaction time of MnSO₄ and NiSO₄ with stirring was 5 hours and the firing temperature of the mixture of (Mn_{0.667}Ni_{0.333})CO₃, LiF and Li₂CO₃ was 700°C. The lithium-transition metal composite oxide had a BET specific surface area of 10.77 m²/g and an average pore size of 28.29 nm. The lithium-transition metal composite oxide was adopted as the positive electrode active material of Comparative Example 1, to produce a test cell in the same manner as in Example 1.

### <Comparative Example 2>

A lithium-transition metal composite oxide was synthesized in the same manner as in Example 1 except that the firing temperature of the mixture of (Mn_{0.667}Ni_{0.333})CO₃, LiF and Li₂CO₃ was 700°C. The lithium-transition metal composite oxide had a BET specific surface area of 14.07 m²/g and an average pore size of 29.26 nm. The lithium-transition metal composite oxide was adopted as the positive electrode active material of Comparative Example 2, to produce a test cell in the same manner as in Example 1.

### <Comparative Example 3>

A lithium-transition metal composite oxide was synthesized in the same manner as in Example 1 except that a dispersant was added to the aqueous solution in which MnSO₄ and NiSO₄ were dissolved. The amount of the dispersant added was larger than the amount of the dispersant added in Example 5. The lithium-transition metal composite oxide had a BET specific surface area of 1.29 m²/g and an average pore size of 124.71 nm. The lithium-transition metal composite oxide was adopted as the positive electrode active material of Comparative Example 3, to produce a test cell in the same manner as in Example 1.

### <Comparative Example 4>

A lithium-transition metal composite oxide was synthesized in the same manner as in Example 1 except that a dispersant was added to the aqueous solution in which MnSO₄ and NiSO₄ were dissolved and the firing temperature of the mixture of (Mn_{0.667}Ni_{0.333})CO₃, LiF and Li₂CO₃ was 800°C. The amount of the dispersant added was larger than the amount of the dispersant added in Example 5. The lithium-transition metal composite oxide had a BET specific surface area of 3.65 m²/g and an average pore size of 105.56 nm. The lithium-transition metal composite oxide was adopted as the positive electrode active material of Comparative Example 4, to produce a test cell in the same manner as in Example 1.

### [Evaluation of Energy Density of Positive Electrode]

Each of the test cells of Examples and Comparative Examples was charged to 4.7 V at a constant current of 0.1 C and then discharged to 2.5 V at a constant current of 0.1 C, under a temperature environment at 25°C. The voltage was determined according to the following expression, from the discharge curve here. Voltage = (Discharge energy as sum of amount of electricity at each voltage)/(Discharge capacity at 2.5 V)

The discharge capacity per weight of the active material in the above discharge was determined. The electrode density was determined from the mass of the positive electrode active material included in the positive electrode mixture layer. The energy density was calculated according to the following expression, from the discharge capacity, the voltage, and the electrode density, thus determined. Energy density (Wh/L) = Discharge capacity (Ah/g) × Voltage (V) × Electrode density (g/cm3) × 1000

Table 1 summarized the results of the energy density of the positive electrode in each of the test cells of Examples and Comparative Examples. Table 1 also showed the BET specific surface area and the average pore size of the positive electrode active material included, in each of Examples and Comparative Examples.

**[Table 1]**

| | BET specific sur face area [m²/g] | Average pore size [nm] | Energy density [Wh/L] |
|---|---|---|---|
| Example 1 | 1.34 | 10.42 | 2466 |
| Example 2 | 1.48 | 23.21 | 2558 |
| Example 3 | 3.55 | 20.55 | 2609 |
| Example 4 | 3.56 | 6.73 | 2532 |
| Example 5 | 3.98 | 93.91 | 2536 |
| Comparative Example 1 | 10.77 | 28.29 | 2237 |
| Comparative Example 2 | 14.07 | 29.26 | 2232 |
| Comparative Example 3 | 1.29 | 124.71 | 2325 |
| Comparative Example 4 | 3.65 | 105.56 | 2394 |

The test cells of Examples 1 to 5 were higher in energy density than the test cells of Comparative Examples 1 to 4.

### REFERENCE SIGNS LIST

- 10: secondary battery
- 11: positive electrode
- 12: negative electrode
- 13: separator
- 14: electrode assembly
- 15: exterior body
- 16: sealing assembly
- 17, 18: insulating plate
- 19: positive electrode lead
- 20: negative electrode lead
- 21: grooved portion
- 22: filter
- 23: lower vent member
- 24: insulating member
- 25: upper vent member
- 26: cap
- 26a: opening
- 27: gasket

## Claims

1. A positive electrode active material for a non-aqueous electrolyte secondary battery, including:
a lithium-transition metal composite oxide, wherein
the lithium-transition metal composite oxide
is represented by general formula LiₓMn_{y}Ni_{z}Me_{2-x-y-z}OₐF_{b}, wherein 1 ≤ x ≤ 1.2, 0.4 ≤ y ≤ 0.7, 0.1 ≤ z ≤ 0.4, 0 < b ≤ 0.2, 1.9 ≤ a + b ≤ 2.1, and Me is at least one element selected from Co, Al, Ti, Ge, Nb, Sr, Mg, Si, P, and Sb,
has a BET specific surface area of 1 m²/g or more and 4 m²/g or less, and
has an average pore size of 100 nm or less.

2. The positive electrode active material for a non-aqueous electrolyte secondary battery according to claim 1, wherein the lithium-transition metal composite oxide has an average pore size of 50 nm or less.

3. The positive electrode active material for a non-aqueous electrolyte secondary battery according to claim 1 or 2, wherein the lithium-transition metal composite oxide has a BET specific surface area of 3 m²/g or more and 4 m²/g or less.

4. The positive electrode active material for a non-aqueous electrolyte secondary battery according to any one of claims 1 to 3, wherein the lithium-transition metal composite oxide contains no Co.

5. A non-aqueous electrolyte secondary battery (10), comprising:
a positive electrode (11) including the positive electrode active material for a non-aqueous electrolyte secondary battery according to any one of claims 1 to 4;
a negative electrode (12); and
a non-aqueous electrolyte.

## Patentansprüche

1. Positivelektroden-Aktivmaterial für Sekundärbatterie mit wasserfreiem Elektrolyt, umfassend:
ein Lithium-Übergangsmetall-Verbundoxid, wobei
das Lithium-Übergangsmetall-Verbundoxid
durch die allgemeine Formel LiₓMn_{y}Ni_{z}Me_{2-x-y-z}OₐF_{b} dargestellt ist, wobei 1 ≤ x ≤ 1,2, 0,4 ≤ y ≤ 0,7, 0,1 ≤ z ≤ 0,4, 0 < b ≤ 0,2, 1,9 ≤ a + b ≤ 2,1 und Me mindestens ein Element ist, das ausgewählt ist aus Co, Al, Ti, Ge, Nb, Sr, Mg, Si, P und Sb,
eine BET-spezifische Oberfläche von 1 m²/g oder größer und 4 m²/g oder kleiner aufweist, und
eine durchschnittliche Porengröße von 100 nm oder kleiner aufweist.

2. Positivelektroden-Aktivmaterial für Sekundärbatterie mit wasserfreiem Elektrolyt nach Anspruch 1, wobei das Lithium-Übergangsmetall-Verbundoxid eine durchschnittliche Porengröße von 50 nm oder weniger aufweist.

3. Positivelektroden-Aktivmaterial für Sekundärbatterie mit wasserfreiem Elektrolyt nach Anspruch 1 oder 2, wobei das Lithium-Übergangsmetall-Verbundoxid eine BET-spezifische Oberfläche von 3 m²/g oder größer und 4 m²/g oder kleiner aufweist.

4. Positivelektroden-Aktivmaterial für Sekundärbatterie mit wasserfreiem Elektrolyt nach einem der Ansprüche 1 bis 3, wobei das Lithium-Übergangsmetall-Verbundoxid kein Co enthält.

5. Sekundärbatterie (10) mit wasserfreiem Elektrolyt (10), umfassend:
eine Positivelektrode (11), die das Positivelektroden-Aktivmaterial für Sekundärbatterie mit wasserfreiem Elektrolyt nach einem der Ansprüche 1 bis 4 umfasst;
eine Negativelektrode (12); und
einen wasserfreien Elektrolyt.

## Revendications

1. Matériau actif d'électrode positive pour une batterie rechargeable à électrolyte non aqueux, comprenant :
un oxyde composite de lithium et de métal de transition, lequel oxyde composite de lithium et de métal de transition
est représenté par la formule générale LiₓMnₙNi_{z}Me_{2-x-y-z}OₐF_{b} où 1 ≤ x ≤ 1,2, 0,4 ≤ y ≤ 0,7, 0,1 ≤ z ≤ 0,4, 0 < b ≤ 0,2, 1,9 < a + b < 2,1, et Me est au moins un élément choisi parmi Co, Al, Ti, Ge, Nb, Sr, Mg, Si, P et Sb,
a une surface spécifique BET de 1 m²/g ou plus et 4 m²/g ou moins, et
a une taille de pore moyenne de 100 nm ou moins.

2. Matériau actif d'électrode positive pour une batterie rechargeable à électrolyte non aqueux selon la revendication 1, dans lequel l'oxyde composite de lithium et de métal de transition a une taille de pore moyenne de 50 nm ou moins.

3. Matériau actif d'électrode positive pour une batterie rechargeable à électrolyte non aqueux selon la revendication 1 ou 2, dans lequel l'oxyde composite de lithium et de métal de transition a une surface spécifique BET de 3 m²/g ou plus et 4 m²/g ou moins.

4. Matériau actif d'électrode positive pour une batterie rechargeable à électrolyte non aqueux selon l'une quelconque des revendications 1 à 3, dans lequel l'oxyde composite de lithium et de métal de transition ne contient pas de Co.

5. Batterie rechargeable à électrolyte non aqueux (10), comprenant :
une électrode positive (11) contenant le matériau actif d'électrode positive pour une batterie rechargeable à électrolyte non aqueux de l'une quelconque des revendications 1 à 4 ;
une électrode négative (12) ; et
un électrolyte non aqueux.
